# EUROPEAN PATENT SPECIFICATION

(11) **EP 3 056 072 B1**
(45) Date of publication and mention of the grant of the patent: **18.10.2017**
(21) Application number: 16155490.2
(22) Date of filing: 12.02.2016
(51) Int. Cl.: A01B 33/14

(54) **A SOIL CULTIVATING IMPLEMENT**
BODENBEARBEITUNGSGERÄT
DISPOSITIF POUR LE TRAVAIL DU SOL

(30) Priority: 16.02.2015 NL 1041193
(43) Date of publication of application: 17.08.2016
(73) Proprietor: Modus S.à.r.l., 8399 Windhof (Koerich) (LU)
(72) Inventor: PEETERS, Daniel Petrus Marie, 2920 NIEUWMOER-KALMTHOUT (BE)
(74) Representative: Algemeen Octrooi- en Merkenbureau B.V.

(56) References cited:
- EP-A1- 0 250 055
- EP-A1- 2 052 594

## Description

The present invention relates to a soil cultivating unit for a soil cultivating implement, in particular for a rotary harrow, comprising a tine carrier configured for rotation round a rotation axis during use and comprising two tines for coupling to the tine carrier,
each of the two tines comprising a connecting part and a soil working part connecting to the connecting part and extending at least substantially at right angles to the connecting part and in use at least substantially parallel to the rotation axis and downward, wherein in the connecting part a passage is provided which is configured for form-locked engagement of the tine for the purpose of coupling the tine to the tine carrier,
wherein the tine carrier comprises a carrier body with two chambers which are adapted to the connecting part of the tines and into each of which, for the purpose of coupling one of the two tines to the tine carrier, the connecting part of this tine can be inserted.

The present invention also relates to a tine and to a tine carrier for such a soil cultivating unit, and relates to a soil cultivating implement comprising a plurality of such soil cultivating units.

NL 860573 relates to a soil cultivating unit with soil working tines of the screw connection type.

EP 2 052 594 relates to a soil cultivating unit according to the preamble of claim 1. This known unit has two tines connected releasably to a tine carrier. The tines have a passage in a connecting part intended to be attached fixedly under the tine carrier. A bolt hole is provided centrally under the tine carrier. The unit has a fastening element which is provided separately of the tine carrier and which is butterfly-shaped. The fastening element drops in form-locked manner with two projections provided at opposite outer ends into the passages of the two tines placed under the tine carrier. The fastening element can then be secured under the tine carrier with a bolt in the bolt hole. The two tines are in this way attached fixedly under the tine carrier. During use of the unit in cultivating soil, such as usually agricultural land, the tines must be replaced regularly because the soil working part thereof is highly susceptible to wear.

A drawback of this known soil cultivating unit is that the attachment of the tines to the tine carrier is not very robust.

An object of the present invention is therefore to provide a soil cultivating unit wherein the tines can be attached in highly robust and also reliable manner to the tine carrier.

Said object is achieved with the soil cultivating unit according to the invention, characterized in that the tine carrier further comprises per chamber a retaining body confined in the carrier body and movable between a release position and a retaining position, wherein the retaining body is configured to be received in form-locked manner in the passage in the connecting part of the tine for the purpose of coupling the relevant tine to the tine carrier in the retaining position thereof, wherein each carrier body comprises a first receiving part connecting to a first side of the chamber and a second receiving part connecting to an opposite second side of this chamber and opposite the first receiving part, wherein, when the tine is inserted with its connecting part into this chamber, the first receiving part and second receiving part also lie in line with the passage of this tine and the retaining body extends in the retaining position through the passage and is also received in form-locked manner in the first and second receiving parts.

According to the invention the retaining body not only extends in form-locked manner in the passage in the connecting part of the tine, but it also extends in form-locked manner in a first and second receiving part directly adjacent thereto in the tine carrier. The retaining body is hereby provided in exceptionally stable manner and in fixed position in the tine carrier. Because the tines moreover protrude with the connecting parts thereof into a chamber adapted to the form thereof, the coupling of the tines to the tine carrier making use of the retaining body is exceptionally robust and reliable, this being a significant advantage of the soil cultivating unit according to the invention compared to the above specified known soil cultivating unit. A soil cultivating unit according to the invention with a said retaining body, which according to the invention is confined inside the carrier body, further facilitates mounting and demounting of tines on and from the tine carrier, and makes the assembly process less susceptible to errors. This in contrast to the above specified known unit, wherein separate components are used to mount tines on the tine carrier.

Each retaining body preferably has a retaining part with which the retaining body is received form-locked in the first receiving part of the carrier body and, at least in the retaining position in the chamber when a tine is present in the passage, in this tine, wherein in the release position the retaining part is received in the first receiving part and lies outside the chamber such that a tine is removable from this chamber or insertable into this chamber. Release or retention are in this way easily realized.

The retaining body is preferably confined inside the carrier body in that movement of the retaining part of the retaining body is bounded on the one hand by the first receiving part and, in the retaining position, on the other by material of the carrier body which forms the wall of the second receiving part and thereby forms the said stop. Because the retaining body is confined inside the carrier body, the soil cultivating unit does not therefore have any separate or loose components for attaching the tines as is indeed the case in the specified prior art soil cultivating unit. This also contributes significantly to the robustness and reliability of the soil cultivating unit according to the invention.

It is further favourable for the tine carrier to comprise for each retaining body a spring element which is configured to urge the retaining body under the influence of spring action to the retaining position thereof, wherein the carrier body comprises for each retaining body a stop which blocks movement of the retaining body from the release position to beyond the retaining position. Application of such a spring element makes operation even simpler since the retaining body, in the absence of external operating forces, moves to the retaining position. A reliable attachment of the tines to the tine carrier is hereby also achieved. The spring element is preferably a coil spring.

In a structurally simple preferred embodiment the spring element is provided in the first receiving part between a part of the wall of the first receiving part and the retaining part of the retaining body. The first receiving part is preferably a blind hole and the spring element is provided between the bottom of the blind hole and the retaining part. It is favourable here for the retaining part to have on its outer end facing toward the bottom a cavity in which the spring element is at least partially received. An exceptionally compact construction is in this way obtained.

It is also advantageous for the passage to be open via a constriction on a free outer end of the connecting part remote from the working part. A length direction of the connecting part is the direction in which the connecting part extends from the working part of the tine to the free outer end thereof. A width direction is oriented transversely of this length direction. The constriction thus has a smallest width, as seen in the width direction, which is smaller than the greatest width of the passage.

Highly preferred is that each retaining body is constructed from the retaining part and a narrowed portion connecting thereto, which narrowed portion is such that it can pass through said constriction in the connecting part of the tine, wherein in the retaining position of the retaining body the narrowed portion is received in the second receiving part and in the release position is situated in the chamber. A particularly stable retention of the retaining body in the tine carrier is hereby realized, wherein the retaining body is movable in reliable manner between the retaining position and the release position. Such a retaining body is further simple and inexpensive to produce. In a preferred embodiment the retaining body is moved by exerting an operating force on the narrowed portion in the direction of the retaining part. Because the narrowed portion is situated in the chamber in the release position, and so not for instance a part of an operating tool, it is achieved that a tine can be coupled to the tine carrier safely and reliably with the retaining body.

For the purpose of an exceptionally simple operation without any component having to be detached, it is favourable that each retaining body can be operated from the outer side of the tine carrier for movement thereof from the retaining position to the release position.

It is favourable here for the second receiving part to be open to the outside on the side thereof remote from the chamber such that the narrowed portion of the retaining body can be operated via this open outer side of the second receiving part for movement thereof from the retaining position to the release position.

In a simple preferred embodiment the retaining part of the retaining body is cylindrical and the passage has a round cross-section. Said greatest width of the passage is in this case therefore equal to the diameter of the round cross-section of the passage.

The retaining part is preferably cylindrical with an outer diameter and the narrowed portion is cylindrical with an outer diameter, wherein the outer diameter of the narrowed portion lies in the range of 30 to 90 percent of the outer diameter of the retaining part.

The narrowed portion is preferably concentric to the retaining part.

It is also favourable for the retaining body to be one integral pin-like component.

In a preferred embodiment the carrier body comprises a projection protruding into the chamber, wherein each said tine comprises in its connecting part a recess, preferably a groove, which is configured such that during insertion of the connecting part of the tine into the chamber the projection moves in the recess. Due to the presence of such a projection with recess, such as preferably a groove, coacting therewith insertion of a tine into the chamber becomes even less susceptible to error. In the situation where the tine is attached to the tine carrier the combination of projection and recess moreover contributes toward a highly rigid, vibration-free orientation of the tine relative to the tine carrier and toward this being maintained during the highly variable loads during use of the soil cultivating unit.

It is favourable here for the groove to be provided out of the centre as seen in width direction of the connecting part of the tine. It is hereby possible to even greater extent to prevent unintentional mounting of a wrong type of tine.

The projection is preferably provided here between the position of the first or second receiving part associated with this chamber and the opening of the chamber via which a said tine is insertable with the connecting part thereof into this chamber, wherein the recess is a groove which connects to the passage in the connecting part and extends in the direction of the working part, and the projection preferably tapers in the direction of the opening of the chamber via which a said tine is insertable with the connecting part thereof into this chamber, and the recess in the connecting part of the tine preferably tapers in the direction of the working part of this tine. The tapering form contributes toward fixing of the tine in position in the chamber.

In a particular, universally applicable preferred embodiment of a soil cultivating unit according to the invention the carrier body of the tine carrier is also provided with two combinations of a positioning member having therein a screw connecting part such as preferably a bolt hole, wherein each of the two combinations comprise stop surfaces which are configured for rigid coupling thereto in a predetermined orientation of a tine for soil cultivation of the screw connection type, preferably with a soil working part having a droplet-shaped free outer end, such that a soil working part of this tine extends downward, at least in use, by screwing the tine onto the positioning member with a bolt while making use of the bolt hole. Such tines are known from for instance NL 8601573 and are still in frequent use in practice.

Each bolt hole preferably extends into a chamber of the two chambers, and the bolt is such that in the situation where it is screwed into the bolt hole it protrudes with its outer end into the chamber. A safeguard is hereby realized in simple manner against mounting of four tines on the tine carrier, i.e. two of the above stated tines and two tines of the screw connection type, which could result in overload of the tine carrier.

The invention further relates to a tine for application in an above specified soil cultivating unit according to the invention, comprising a connecting part and a soil working part connecting to the connecting part and extending substantially at right angles to the connecting part, wherein in the connecting part a passage is provided which is configured for form-locked engagement of the tine for the purpose of enabling coupling of the tine to the tine carrier. The tine preferably comprises in its connecting part a recess, preferably a groove, which is configured such that during insertion of the connecting part of the tine into a chamber the groove moves over a projection of the carrier body of the tine carrier which protrudes into this chamber, wherein the recess preferably connects to the passage in the connecting part and extends in the direction of the working part of this tine.

The invention also relates to a tine carrier for an above specified soil cultivating unit according to the invention for use in combination with two tines each comprising a connecting part and a soil working part connecting to the connecting part and extending substantially at right angles to the connecting part, wherein in the connecting part a passage is provided which is configured for form-locked engagement of the tine for the purpose of coupling the tine to the tine carrier, the tine carrier comprising a carrier body with two chambers which are adapted to the connecting part of the tines and into each of which, for the purpose of coupling one of the two tines to the tine carrier, the connecting part of this tine can be inserted, wherein the tine carrier further comprises per chamber a retaining body which is confined in the carrier body and which is movable between a release position and a retaining position, wherein the retaining body is configured to be received in form-locked manner in the passage in the connecting part of one of the two tines for the purpose of coupling the relevant tine to the tine carrier in the retaining position thereof, wherein each carrier body comprises a first receiving part connecting to a first side of the chamber and a second receiving part connecting to an opposite second side of this chamber and opposite the first receiving part, wherein, when said relevant tine is inserted with its connecting part into this chamber, the first receiving part and second receiving part also lie in line with the passage of this tine and the retaining body extends in the retaining position through the passage and is also received in form-locked manner in the first and second receiving parts.

The invention also relates to a soil cultivating implement, in particular a rotary harrow, comprising a frame, a plurality of above specified soil cultivating units according to the present invention which are each mounted for rotation about the rotation axis thereof on the frame, and further comprising a drive mechanism connected to each of the units to enable combined driving of the plurality of units such that each unit thereof rotates about its rotation axis.

In a favourable preferred embodiment the plurality of soil cultivating units comprises a first number of soil cultivating units which in operation each rotate in a first rotation direction about the rotation axis thereof and a second number of soil cultivating units which in operation each rotate in a second rotation direction, opposite to the first rotation direction, about the rotation axis thereof, wherein the carrier body of the plurality of soil cultivating units comprises a projection protruding into the chamber wherein each said tine comprises in its connecting part a recess, preferably a groove, which is configured such that during insertion of the connecting part of the tine into the chamber the projection moves in the recess, wherein said projection in soil cultivating units of the first number protrudes differently into the chamber thereof compared to the projection of the second number, and wherein said tines comprise tines of a first type, the recess of which is adapted to the projection of the first number so that tines of the first type can be inserted into chambers of soil cultivating units of the first number but not into chambers of soil cultivating units of the second number, and wherein said tines also comprise tines of a second type, the recess of which is adapted to the projection of the second number so that tines of the second type cannot be inserted into chambers of soil cultivating units of the first number but can be inserted into chambers of soil cultivating units of the second number. Hereby realized in particularly efficient manner is that tines, the form of the soil working part of which is usually adapted to the direction of movement in the ground, can only be inserted into a chamber of a soil cultivating unit which rotates during operation such that the soil working part moves through the ground in the direction of movement.

It is a further advantage for the soil cultivating implement to comprise a separate mounting tool which is releasably connectable to the tine carrier in order to enable movement of the retaining body in coupled state from the retaining position to the release position. The retaining body can be moved efficiently and reliably using such a mounting tool.

The mounting tool preferably comprises here a lever which at the position of a pivot axis thereof is connectable at a distance from the two second receiving parts to the tine carrier and on the one hand extends therefrom with two arms thereof to the second receiving parts and on the other extends, with a control arm connected rigidly to the arms, away from the tine carrier, wherein by pivoting the control arm about the pivot pin the two arms make a pivoting movement during use such that free outer ends of the arms protrude into the second receiving parts in order to move the respective retaining bodies from the retaining position to the release position.

The pivot pin of the lever is preferably provided by placing the mounting tool with a coupling part thereof, which is pivotable about the pivot pin relative to the arms and control arm, in a said bolt hole.

Advantages of such a tine and tine carrier and such a soil cultivating implement according to the invention correspond to the above described advantages of the soil cultivating unit according to the invention.

The present invention will be elucidated hereinbelow on the basis of the description of preferred embodiments of soil cultivating units according to the invention with reference to the following figures, in which:
- figure 1 is a three-dimensional view of a preferred embodiment of a soil cultivating unit according to the invention,
- figure 2 is a three-dimensional view of a further preferred embodiment of a soil cultivating unit according to the invention wherein one of the two tines of the soil cultivating unit is shown separately,
- figure 3a shows a partial cross-section of the soil cultivating unit according to figure 2,
- figure 3b shows a top view of the soil cultivating unit according to figure 2,
- figure 4 shows the soil cultivating unit according to figure 2 as seen at an angle from below,

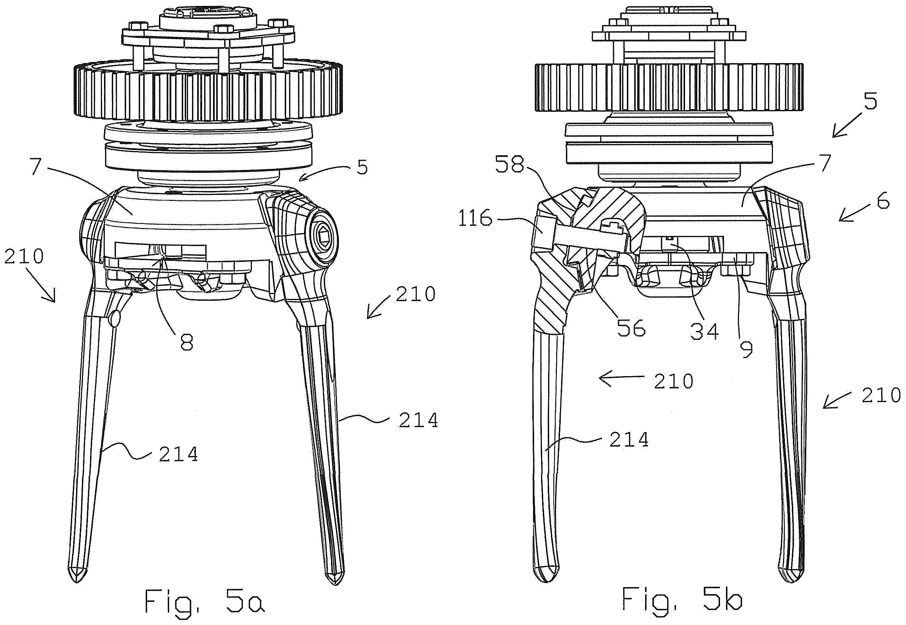

- figure 5a shows the application of at least a tine carrier of the soil cultivating unit according to figures 1-4 in combination with soil cultivation tines of another type,
- figure 5b shows a partial cross-section of the combination of tine carrier and tines according to figure 5a,
- figure 6a is a three-dimensional view of a combination of the soil cultivating unit according to figure 2 with a mounting tool, and
- figure 6b is another three-dimensional view of the combination according to figure 6a.

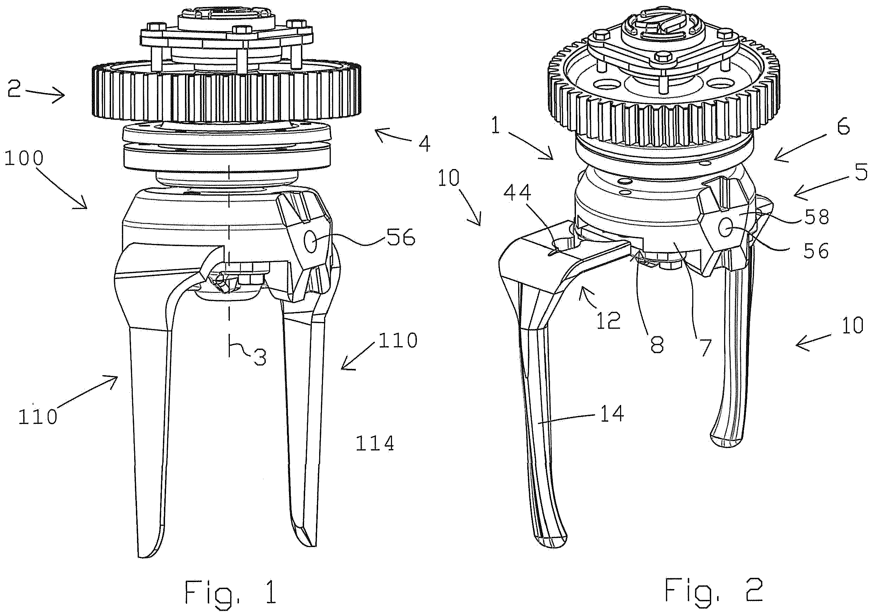

Figure 1 shows a soil cultivating unit 100 configured for use in a soil cultivating implement, in particular a rotary harrow. A rotary harrow comprises a frame in which a plurality of the soil cultivating units 100 and/or soil cultivating units 1 further elucidated in more detail below are mounted for rotation. The rotary harrow further comprises a drive mechanism connected to each of the units, more specifically to a sprocket wheel 2 thereof, to enable combined driving of the plurality of units 100, 1 such that each unit 100, 1 thereof rotates about its rotation axis 3.

The soil cultivating unit 100 has a tine carrier 5 which is coupled to a suspension part 4 comprising said sprocket wheel 2. The soil cultivating unit 100 further comprises two tines 110 coupled releasably to the tine carrier 5.

The tine carriers of the soil cultivating units 1, 100 shown in the figure are the same and corresponding components are therefore designated in the figures with the same reference numerals.

The soil cultivating unit 100 comprises two tines 110 which consist of a flat connecting part 12 and a knife-like working part 114 which connects at right angles to the connecting part 12 and is specially configured to work soil. The tines 110 are manufactured from a strip-like piece of starting material folded at right angles and machined. The material thickness of the starting material is about 15 mm in the present embodiment. The length of the working part 114 is about 50 cm. During use the connecting part 12 extends substantially horizontally and the working part 114 extends downward at least roughly parallel to rotation axis 3 into the soil to be worked.

The soil cultivating unit 1 thus differs from the soil cultivating unit 100 only in respect of the tines coupled to the tine carrier 5. Coupled to the tine carrier 5 of the soil cultivating unit 1 are tines 10 which have a connecting part 12 which is the same as the connecting part 12 of the tines 110. The tines 10 further have a soil working part 14 provided at right angles to the connecting part 12. The working part 14 is droplet-shaped. The shape of the working part to be used depends for instance on the soil composition or type.

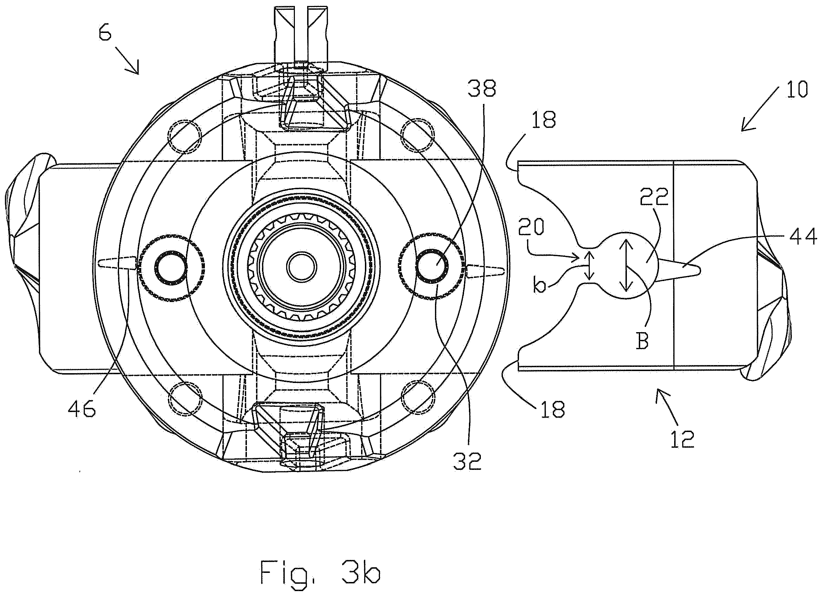

A passage 22 is provided in the connecting part 12. The passage has a circular cross-section. The passage 22 is open via a constriction 20 at a free outer end 18 of the connecting part 12 remote from the working part 14. See figure 3b. A length direction 24 of the connecting part 12 is the direction in which the connecting part 12 extends transversely from the working part 14 of the tine 10 to the free outer end 18 thereof. A width direction is oriented transversely of this length direction. The constriction 20 thus has a smallest width b, as seen in the width direction, which is smaller than the greatest width B of the passage. The greatest width B corresponds in the present embodiment to the diameter of the circular passage 22. Owing to this configuration of the passage 22 the tine 10 can be blocked in the tine carrier 5 by form-locking engagement thereof.

The constriction 20 transposes on the side remote from the passage 22 as seen in the length direction 24 into a semicircular portion at the position of the free outer end 18.

The tine carrier 5 has a carrier body 6 in which are provided two flat chambers 8, the form which is adapted to that of the connecting part 12 of the tines 10. A tine 10 (or 100) can thus be inserted or pushed with the connecting part 12 thereof into one of the two chambers 8 for mutual coupling of a tine 10 and the tine carrier 5. The chambers 8 are arranged directly opposite each other in the carrier body 6. The carrier body is constructed substantially from a block-like base part 7 in which a flat slot is provided on the underside. A cover plate 9 screwed against the underside of the base part 7 covers these slots in order to thus form the chambers 8 in the carrier body 6 of the tine carrier 5.

The tine carrier 5 further comprises for each of the chambers 8 a retaining body 30 which is confined in the carrier body 6 and which is configured to receive the tine 10 in form-locked manner in the passage 22 in the connecting part 12 for the purpose of the above stated coupling of a tine 10 (or 100), which is therefore then situated with the connecting part 12 in the chamber 8, to the tine carrier 5. The retaining bodies 30 are confined in the carrier body 6 between the base part 7 and the cover plate 9.

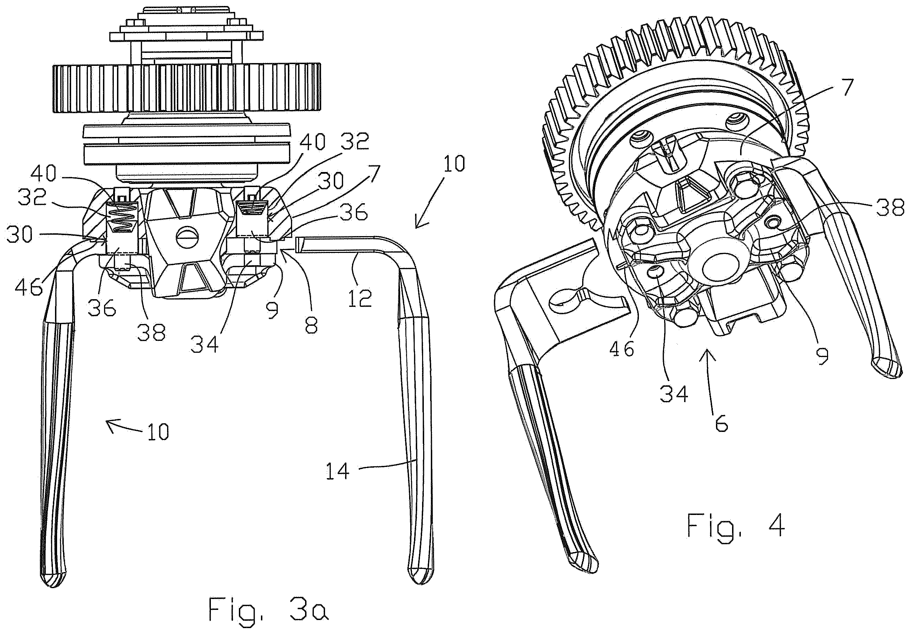

Further provided in the carrier body 6 for each of the chambers 8 are a first receiving part 32 and a second receiving part 34 which lie mutually in line and provided on opposite sides of a chamber 8. The first receiving part 32 is a cylindrical, non-continuous or blind hole. The second receiving part 34 is a cylindrical through-hole, more specifically in the cover plate 9 of the carrier body 6. The diameter of the second receiving part 34 is roughly half the diameter of the first receiving part 32. Shown in the view according to figure 3a is that the first receiving part 32 is provided on the upper side of the chamber 8 and a second receiving part 34 on the underside.

Each retaining body 30 is pin-like and consists of a cylindrical retaining part 36 and a cylindrical narrowed portion 38 connecting thereto. The retaining part 36 has a diameter which is adapted to the diameter of the first receiving part 32 such that the retaining body 30 is received with the retaining part 36 thereof in form-locked manner in the first receiving part 32, preferably with a sliding fit. A height of the retaining part 36 as seen in the length direction of the retaining body 30 is smaller than the depth of the first receiving part 32 so that the retaining part 36 can be fully countersunk into the first receiving part 32, this being shown in figure 3a for the retaining body 30 shown on the right. Provided between a bottom of the first receiving part 32 and the retaining body 30 is a coil spring 40 which urges the retaining body 30 out of the first receiving part 32.

The narrowed portion 38 has a diameter adapted to the diameter of the second receiving part 34 such that the retaining body 30 can be received in form-locked manner with the narrowed portion 38 thereof in the second receiving part 34, preferably with a sliding fit. Because the diameter of the retaining part 36 is greater than the diameter of the narrowed portion 38, the wall material of the second receiving part 34 forms a stop to movement of the retaining body 30 in the direction of the second receiving part 34.

Owing to the above described construction the retaining body 30 is movable between a retaining position, in which the retaining body 30 is received with the retaining part 36 thereof in the first receiving part 32 of the carrier body 6 and in the chamber 8, when a tine 10 is present in the passage 22, in this tine 10, as shown in figure 3a for the chamber 8 located on the left-hand side, and a release position in which the retaining part 36 is received in the first receiving part 32 and lies outside the chamber 8, or is clear of the passage 22, so that the tine 10 is removable from the chamber 8, as shown in figure 3a for the chamber 8 located on the right-hand side. In the retaining position the narrowed portion 38 is form-locked in the second receiving part 34. The retaining body 30 is hereby positioned in highly stable manner and in fixed position in the carrier body 6. In the release position the narrowed portion 38 is situated in the chamber 8. This does not however prevent the tine 10 being pulled out of the chamber 8, since the narrowed portion 38 can pass through the constriction 20 in the connecting part 12 of the tine 10 connecting to the passage 22. That is, the diameter of the narrowed portion 38 is smaller than the width b of the constriction 20.

Because the second receiving part 34 is a through-hole, the retaining body 30 can easily be operated from outside for the purpose of moving thereof from the retaining position to the release position counter to the spring force of the coil spring 40. This can take place directly by hand, for instance by pushing with a finger, in the view according to figure 3a, from below against the narrowed portion 38 of the retaining body 30. In order however to prevent to the greatest possible extent that the retaining body 30 remains caught in the release position thereof, for instance as a result of fouling, and does not automatically move back to the retaining position under the influence of the spring force, the spring tension is preferably such that direct manual movement of the retaining body 30 is relatively difficult.

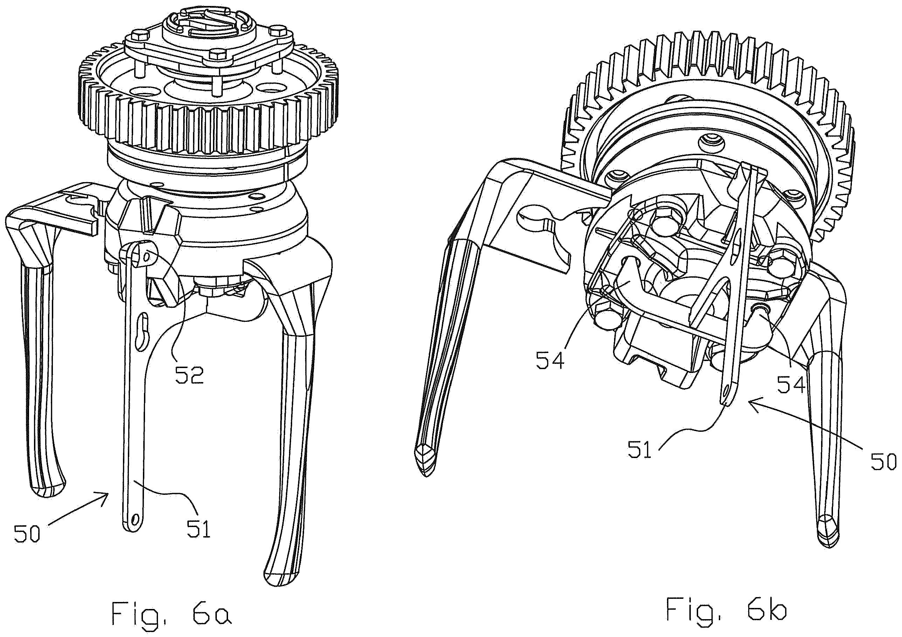

A tool 50 is therefore provided as shown in figures 6a and 6b. The tool 50 has an operating arm 51 which is connected pivotally to a coupling part in the form of a pin 52 which, for the purpose of mounting a tine, is temporarily inserted, or alternatively screwed, into a bolt hole 56 in the carrier body 6. See also figure 2. The operating arm 51 extends beyond the coupling part 52 as two arms, the free outer ends of which form push pins 54 located directly below the two respective second receiving parts 34 embodied as through-holes. By now moving the operating arm 51 downward at the free outer end thereof (as according to the view of figures 6a and 6b) the two push pins 54 move upward round the pivot shaft in pin 52 because of the lever action and push against the retaining bodies 30. The retaining bodies 30 can hereby be moved easily from the retaining position to the release position thereof using the tool 50 so that one or both tines 10 can be removed or a tine 10 can be inserted into a chamber 8.

The tines 10 are further provided with a recess in the form of a groove 44 which connects to the passage 22 in the connecting part 12 and extends in the direction of the working part 14. See particularly figure 2. The carrier body also has projections 46 protruding into each of the chambers. In the case of each chamber 8 the projection 46 is provided between the position of the first 34 or second 32 receiving part associated with this chamber 8 and the opening of the chamber 8 via which a said tine 10 is insertable with the connecting part 12 thereof into this chamber. The groove 44 and the projection 46 are configured such that during insertion of the connecting part 12 of the tine 10 into the chamber 8 the projection 46 moves in the groove 44. By providing the projection 46 and groove 44 out of centre as seen in width direction, wherein the position of the projection and groove differs in different soil cultivating units depending on the rotation direction thereof when mounted on the rotary harrow, it is possible to achieve that determined tines fit only on determined tine carriers such that the tine rotates in the correct direction.

As shown in the figures, the two chambers 8 are provided directly opposite each other. Provided therebetween, or transversely thereof, on either side of the carrier body 6 is a bolt hole 56 as stated above. These bolt holes 56 are intended primarily for coupling two soil working tines 210 of the screw type to the carrier body 6. Such tines 210 are used on relatively large scale. The bolt holes 56 for this purpose form part of a combination of a bolt hole 56 provided in a positioning member 58 which comprises stop surfaces for rigid coupling thereto of a soil working tine 210 of the screw connection type in a predetermined orientation such that a soil working part 214, at least in use, extends downward from this tine 210. The form of the soil working part 214 of the tine 210 is otherwise similar to that of the tines 110. The tines 210 are secured against the positioning member 58 with a bolt 116 in bolt hole 56. Because of this construction the soil cultivating unit, or at least the tine carrier 5 thereof, can be applied in particularly universal manner, with a great freedom of soil working tines for use with the unit. The bolt holes debouch inside the carrier body 6 into a respective one of the chambers 8. The bolts 116 have a length such that, when a said tine 210 is coupled to the tine carrier 5, the bolts protrude with an outer end thereof into the chambers 8 and a tine 10 or 110 cannot therefore be inserted into a chamber 8. Conversely, when a tine 10 110 is present in a chamber 8, a tine 210 cannot be screwed fixedly since the connecting part 12 of this tine 210 prevents the bolt 116 being screwed in sufficiently far. An exceptionally effective overload safeguard is thus provided for the tine carrier 5.

## Claims

1. A soil cultivating unit for a soil cultivating implement, in particular for a rotary harrow, comprising a tine carrier configured for rotation round a rotation axis during use and comprising two tines for coupling to the tine carrier,
each of the two tines comprising a connecting part and a soil working part connecting to the connecting part and extending at least substantially at right angles to the connecting part and in use at least substantially parallel to the rotation axis and downward, wherein in the connecting part a passage is provided which is configured for form-locked engagement of the tine for the purpose of coupling the tine to the tine carrier,
wherein the tine carrier comprises a carrier body with two chambers which are adapted to the connecting part of the tines and into each of which, for the purpose of coupling one of the two tines to the tine carrier, the connecting part of this tine can be inserted,
**characterized in that** the tine carrier further comprises per chamber a retaining body confined in the carrier body and movable between a release position and a retaining position, wherein the retaining body is configured to be received in form-locked manner in the passage in the connecting part of the tine for the purpose of coupling the relevant tine to the tine carrier in the retaining position thereof,
wherein each carrier body comprises a first receiving part connecting to a first side of the chamber and a second receiving part connecting to an opposite second side of this chamber and opposite the first receiving part, wherein, when the tine is inserted with its connecting part into this chamber, the first receiving part and second receiving part also lie in line with the passage of this tine and the retaining body extends in the retaining position through the passage and is also received in form-locked manner in the first and second receiving parts.

2. The soil cultivating unit according to claim 1, wherein each retaining body has a retaining part with which the retaining body is received form-locked in the first receiving part of the carrier body and, at least in the retaining position in the chamber when a tine is present in the passage, in this tine, wherein in the release position the retaining part is received in the first receiving part and lies outside the chamber such that a tine is removable from this chamber or insertable into this chamber.

3. The soil cultivating unit according to claim 2, wherein the retaining body is confined inside the carrier body in that movement of the retaining part of the retaining body is bounded on the one hand by the first receiving part and, in the retaining position, on the other by material of the carrier body which forms the wall of the second receiving part.

4. The soil cultivating unit according to claim 1, 2 or 3, wherein the tine carrier comprises for each retaining body a spring element which is configured to urge the retaining body under the influence of spring action to the retaining position thereof, wherein the carrier body comprises for each retaining body a stop which blocks movement of the retaining body from the release position to beyond the retaining position, which spring element is preferably provided in the first receiving part between a part of the wall of the first receiving part and the retaining part of the retaining body.

5. The soil cultivating unit according to any of the preceding claims, wherein the passage is open via a constriction on a free outer end of the connecting part remote from the working part.

6. The soil cultivating unit according to claim 5, wherein each retaining body is a pin which is constructed from the retaining part and, as seen in longitudinal direction of the pin, a narrowed portion connecting thereto, which narrowed portion is such that it can pass through said constriction in the connecting part of the tine, wherein in the retaining position of the retaining body the narrowed portion is received in the second receiving part and in the release position is situated in the chamber.

7. The soil cultivating unit according to any of the preceding claims, wherein each retaining body can be operated from the outer side of the tine carrier for movement thereof from the retaining position to the release position.

8. The soil cultivating unit according to claims 6 and 7, wherein the second receiving part is open to the outside on the side thereof remote from the chamber such that the narrowed portion of the retaining body can be operated via this open outer side of the second receiving part for movement thereof from the retaining position to the release position.

9. The soil cultivating unit according to any of the preceding claims, wherein the retaining body is one integral pin-like component.

10. The soil cultivating unit according to any of the preceding claims, wherein the carrier body comprises a projection protruding into the chamber, wherein each said tine comprises in its connecting part a recess, preferably a groove, which is configured such that during insertion of the connecting part of the tine into the chamber the projection moves in the recess, wherein the projection is preferably provided between the position of the first or second receiving part associated with this chamber and the opening of the chamber via which a said tine is insertable with the connecting part thereof into this chamber, wherein the recess is a groove which connects to the passage in the connecting part and extends in the direction of the working part.

11. The soil cultivating unit according to claim 10, wherein the projection tapers in the direction of the opening of the chamber via which a said tine is insertable with the connecting part thereof into this chamber, and wherein the recess in the connecting part of the tine preferably tapers in the direction of the working part of this tine.

12. The soil cultivating unit according to any of the preceding claims, wherein the carrier body of the tine carrier is also provided with two combinations of a positioning member having therein a screw connecting part such as preferably a bolt hole, wherein each of the two combinations comprise stop surfaces which are configured for rigid coupling thereto in a predetermined orientation of a tine for soil cultivation of the screw connection type such that a soil working part of this tine extends downward, at least in use, by screwing the tine onto the positioning member with a bolt while making use of the bolt hole.

13. A tine for application in a soil cultivating unit according to claim 10 or a claim dependent thereon, comprising a connecting part and a soil working part connecting to the connecting part and extending substantially at right angles to the connecting part, wherein in the connecting part a passage is provided which is configured for form-locked engagement of the tine for the purpose of enabling coupling of the tine to the tine carrier, further comprising in its connecting part a recess, preferably a groove, which is configured such that during insertion of the connecting part of the tine into a chamber the groove moves over a projection of the carrier body of the tine carrier which protrudes into this chamber, wherein the recess preferably connects to the passage in the connecting part and extends in the direction of the working part of this tine.

14. A tine carrier for a soil cultivating unit according to any of the claims 1-12 for use in combination with two tines each comprising a connecting part and a soil working part connecting to the connecting part and extending substantially at right angles to the connecting part, wherein in the connecting part a passage is provided which is configured for form-locked engagement of the tine for the purpose of coupling the tine to the tine carrier, the tine carrier comprising a carrier body with two chambers which are adapted to the connecting part of the tines and into each of which, for the purpose of coupling one of the two tines to the tine carrier, the connecting part of this tine can be inserted,
**characterized in that** the tine carrier further comprises per chamber a retaining body which is confined in the carrier body and which is movable between a release position and a retaining position, wherein the retaining body is configured to be received in form-locked manner in the passage in the connecting part of one of the two tines for the purpose of coupling the relevant tine to the tine carrier in the retaining position thereof,
wherein each carrier body comprises a first receiving part connecting to a first side of the chamber and a second receiving part connecting to an opposite second side of this chamber and opposite the first receiving part, wherein, when said relevant tine is inserted with its connecting part into this chamber, the first receiving part and second receiving part also lie in line with the passage of this tine and the retaining body extends in the retaining position through the passage and is also received in form-locked manner in the first and second receiving parts.

15. A soil cultivating implement, in particular a rotary harrow, comprising a frame, a plurality of soil cultivating units according to any of the claims 1-12 which are each mounted for rotation about the rotation axis thereof on the frame, and further comprising a drive mechanism connected to each of the units to enable combined driving of the plurality of units such that each unit thereof rotates about its rotation axis.

## Patentansprüche

1. Eine Bodenbearbeitungseinheit für ein Bodenbearbeitungsgerät, insbesondere für eine Kreiselegge, die einen Zinkenträger umfasst, der konfiguriert ist, bei Gebrauch um eine Rotationsachse zu rotieren, und zwei Zinken zum Ankoppeln an den Zinkenträger umfasst,
wobei jeder der zwei Zinken ein Anschlussteil und ein Bodenbearbeitungsteil umfasst, das an das Anschlussteil anschließt und sich mindestens im Wesentlichen im rechten Winkel zum Anschlussteil und bei Gebrauch mindestens im Wesentlichen parallel zur Rotationsachse und nach unten erstreckt, wobei in dem Verbindungsteil eine Passage vorgesehen ist, der für ein formschlüssiges Einrasten der Zinke konfiguriert ist, um die Zinke an den Zinkenträger zu koppeln,
wobei der Zinkenträger einen Trägerkörper mit zwei Kammern umfasst, die an das Anschlussteil der Zinken angepasst sind, und in die jeweils zum Zwecke des Ankoppelns von einer der zwei Zinken an den Zinkenträger das Anschlussteil der Zinke eingefügt werden kann,
**dadurch gekennzeichnet, dass** der Zinkenträger ferner je Kammer einen Haltekörper umfasst, der im Trägerkörper eingeschlossen ist und zwischen einer Freigabestellung und einer Haltestellung beweglich ist, wobei der Haltekörper konfiguriert ist, auf formschlüssige Weise in der Passage des Anschlussteils der Zinke aufgenommen zu werden, um die relevante Zinke an den Zinkenträger in der Haltestellung desselben anzukoppeln,
wobei jeder Trägerkörper ein erstes Aufnahmeteil umfasst, das an eine erste Seite der Kammer angeschlossen ist, und ein zweites Aufnahmeteil umfasst, das an die entgegengesetzte zweite Seite dieser Kammer und gegenüber dem ersten Aufnahmeteil angeschlossen ist, wobei, wenn die Zinke mit ihrem Anschlussteil in diese Kammer eingefügt wird, das erste Aufnahmeteil und das zweite Aufnahmeteil ebenfalls auf der Passage dieser Zinke ausgerichtet liegen und der Haltekörper sich in der Haltestellung durch die Passage erstreckt und ebenfalls auf formschlüssige Weise im ersten und zweiten Aufnahmeteil aufgenommen ist.

2. Bodenbearbeitungseinheit nach Anspruch 1, wobei jeder Haltekörper ein Halteteil aufweist, mit dem der Haltekörper formschlüssig im ersten Aufnahmeteil des Trägerkörpers aufgenommen wird und mindestens in der Haltestellung in der Kammer, wenn eine Zinke sich in der Passage befindet, in dieser Zinke, wobei in der Freigabestellung das Halteteil in dem ersten Aufnahmeteil aufgenommen wird und außerhalb der Kammer liegt, sodass eine Zinke aus dieser Kammer entfernt oder in diese Kammer eingefügt werden kann.

3. Bodenbearbeitungseinheit nach Anspruch 2, wobei der Haltekörper im Inneren des Trägerkörpers derart eingeschlossen ist, dass die Bewegung des Halteteils des Haltekörpers einerseits durch das erste Aufnahmeteil eingeschränkt wird und andererseits in der Haltestellung durch das Material des Trägerkörpers, der die Wand des zweiten Aufnahmeteils bildet.

4. Bodenbearbeitungseinheit nach Anspruch 1, 2 oder 3, wobei der Zinkenträger für jeden Haltekörper ein Federelement umfasst, das konfiguriert ist, den Haltekörper unter dem Einfluss des Federdrucks in seine Haltestellung zu drängen, wobei der Trägerkörper für jeden Haltekörper einen Anschlag umfasst, der die Bewegung des Haltekörpers aus der Freigabestellung über die Haltestellung hinaus blockiert, wobei dieses Federelement vorzugsweise im ersten Aufnahmeteil zwischen einem Teil der Wand des ersten Aufnahmeteils und dem Halteteil des Haltekörpers vorgesehen ist.

5. Bodenbearbeitungseinheit nach einem der vorhergehenden Ansprüche, wobei die Passage über eine Einengung an einem freien äußeren Ende des Anschlussteils, fern vom Arbeitsteil, offen ist.

6. Bodenbearbeitungseinheit nach Anspruch 5, wobei jeder Haltekörper ein Bolzen ist, der vom Halteteil und, in Längsrichtung des Bolzens gesehen, einem geschmälerten, daran anschließenden Abschnitt gebildet wird, wobei dieser geschmälerte Abschnitt so gestaltet ist, dass er durch die Einengung im Anschlussteil der Zinke hindurchgehen kann, wobei in der Haltestellung des Haltekörpers der geschmälerte Abschnitt im zweiten Aufnahmeteil aufgenommen wird und sich in der Freigabestellung in der Kammer befindet.

7. Bodenbearbeitungseinheit nach einem der vorhergehenden Ansprüche, wobei jeder Haltekörper von der Außenseite des Zinkenträgers betätigt werden kann, um diesen aus der Haltestellung in die Freigabestellung zu bewegen.

8. Bodenbearbeitungseinheit nach Anspruch 6 und 7, wobei das zweite Aufnahmeteil nach außen auf der Seite desselben, von der Kammer entfernt, offen ist, derart, dass der geschmälerte Abschnitt des Haltekörpers über diese offene Außenseite des zweiten Aufnahmeteils betätigt werden kann, um diesen aus der Haltestellung in die Freigabestellung zu bewegen.

9. Bodenbearbeitungseinheit nach einem der vorhergehenden Ansprüche, wobei der Haltekörper eine integrale, bolzenförmige Komponente ist.

10. Bodenbearbeitungseinheit nach einem der vorhergehenden Ansprüche, wobei der Trägerkörper einen Vorsprung umfasst, der in die Kammer vorspringt, wobei jede Zinke in ihrem Anschlussteil eine Vertiefung, vorzugsweise eine Niet, umfasst, die so konfiguriert ist, dass der Vorsprung sich während des Einführens des Anschlussteils der Zinke in die Kammer in die Vertiefung bewegt, wobei der Vorsprung vorzugsweise zwischen der Position des ersten oder zweiten Aufnahmeteils, das mit dieser Kammer assoziiert ist, und der Öffnung der Kammer, über welche eine Zinke mit dem Anschlussteil derselben in diese Kammer eingefügt werden kann, vorgesehen ist, wobei die Vertiefung eine Niet ist, die sich an der Passage im Anschlussteil anschließt und in der Richtung des Arbeitsteils erstreckt.

11. Bodenbearbeitungseinheit nach Anspruch 10, wobei der Vorsprung sich in Richtung der Kammeröffnung verjüngt, über die eine Zinke mit dem Anschlussteil derselben in dieser Kammer eingefügt werden kann, und wobei die Vertiefung im Anschlussteil der Zinke sich vorzugsweise in Richtung des Arbeitsteils dieser Zinke verjüngt.

12. Bodenbeareitungseinheit nach einem der vorhergehenden Ansprüche, wobei der Trägerkörper des Zinkenträgers ebenfalls mit zwei Kombinationen eines Positionierelements versehen ist, das im Inneren ein Schraubenanschlussteil umfasst, wie zum Beispiel vorzugsweise ein Schraubenloch, wobei jede der zwei Kombinationen Stoppflächen umfasst, die für eine starre Ankoppelung einer Zinke für die Bodenbearbeitung des Schraubenanschlusstyps in einer vorgegebenen Ausrichtung konfiguriert ist, sodass ein Bodenbearbeitungsteil dieser Zinke sich, mindestens bei Gebrauch, nach unten erstreckt, wobei die Zinke mit einem Bolzen auf das Positionierelement unter Nutzung des Schraubenlochs festgeschraubt wird.

13. Eine Zinke zur Anwendung in einer Bodenbearbeitungseinheit nach Anspruch 10 oder einem davon abhängigen Anspruch, die ein Anschlussteil und ein Bodenbearbeitungsteil, das an das Anschlussteil angeschlossen ist und sich im Wesentlichen in rechtem Winkel zum Anschlussteil erstreckt, umfasst, wobei im Anschlussteil eine Passage vorgesehen ist, der für das formschlüssige Einrasten der Zinke konfiguriert ist, um das Ankoppeln der Zinke an den Zinkenträger zu ermöglichen, und ferner in seinem Anschlussteil eine Vertiefung aufweist, vorzugsweise eine Niet, die so konfiguriert ist, dass die Niet während des Einführens des Anschlussteils der Zinke in eine Kammer sich über einen Vorsprung des Trägerkörpers des Zinkenträgers bewegt, der in diese Kammer vorspringt, wobei die Vertiefung vorzugsweise an der Passage im Anschlussteil angeschlossen ist und sich in der Richtung des Arbeitsteils dieser Zinke erstreckt.

14. Zinkenträger für eine Bodenbearbeitungseinheit nach einem der Ansprüche 1 - 12 zur Anwendung in Kombination mit zwei Zinken, die jeweils ein Anschlussteil und ein Bodenbearbeitungsteil, das am Anschlussteil angeschlossen ist und sich im Wesentlichen in einem rechten Winkel zum Anschlussteil erstreckt, umfassen, wobei im Anschlussteil eine Passage vorgesehen ist, die für das formschlüssige Einrasten der Zinke konfiguriert ist, um die Zinke am Zinkenträger anzukoppeln, wobei der Zinkenträger einen Trägerkörper mit zwei Kammern umfasst, die an das Anschlussteil der Zinken angepasst sind, und in die jeweils das Anschlussteil dieser Zinke eingefügt werden kann, um eine der zwei Zinken an den Zinkenträger anzukoppeln,
**dadurch gekennzeichnet, dass** der Zinkenträger ferner pro Kammer einen Haltekörper umfasst, der im Trägerkörper eingeschlossen ist und der zwischen einer Freigabestellung und einer Haltestellung beweglich ist, wobei der Haltekörper konfiguriert ist, auf formschlüssige Weise in der Passage im Anschlussteil von einer der zwei Zinken aufgenommen zu werden, um die relevante Zinke an den Zinkenträger in der Haltestellung desselben anzukoppeln,
wobei jeder Trägerkörper ein erstes Aufnahmeteil, das an eine erste Seite der Kammer anschließt, und ein zweites Aufnahmeteil, das an eine entgegengesetzte zweite Seite dieser Kammer und gegenüber dem ersten Aufnahmeteil anschließt, umfasst, wobei, wenn die relevante Zinke mit ihrem Anschlussteil in diese Kammer eingeführt wird, das erste Aufnahmeteil und zweite Aufnahmeteil ebenfalls auf die Passage dieser Zinke ausgerichtet liegen und der Haltekörper sich in der Haltestellung durch die Passage erstreckt und ebenfalls auf formschlüssige Weise in dem ersten und zweiten Aufnahmeteil aufgenommen wird.

15. Bodenbearbeitungsgerät, insbesondere eine Kreiselegge, die einen Rahmen, mehrere Bodenbearbeitungseinheiten nach einem der Ansprüche 1 - 12 umfasst, die jeweils zur Rotation um die Rotationsachse derselben auf dem Rahmen montiert sind, und ferner einen Antriebsmechanismus umfasst, der an jede der Einheiten angeschlossen ist, um den kombinierten Antrieb der mehreren Einheiten derart zu ermöglichen, dass jede Einheit um ihre Rotationsachse rotiert.

## Revendications

1. Unité de culture du sol pour un outil de culture du sol, en particulier pour une herse rotative, comprenant un support de dents configuré pour tourner autour d'un axe de rotation en cours d'utilisation et comprenant deux dents pour le couplage au support de dents,
chacune des deux dents comprenant une partie de liaison et une partie de travail du sol reliée à la partie de liaison et s'étendant au moins essentiellement à angle droit à la partie de liaison et en cours d'utilisation au moins essentiellement parallèlement à l'axe de rotation et vers le bas, où, dans la partie de liaison, un passage est prévu qui est configuré pour un engagement par complémentarité de forme de la dent dans le but de coupler la dent au support de dents,
dans laquelle le support de dents comprend un corps de support avec deux chambres qui sont adaptées à la partie de liaison des dents et dans chacune desquelles, dans le but de coupler l'une des deux dents au support de dents, la partie de liaison de cette dent peut être insérée,
**caractérisée en ce que** le support de dents comprend en outre, par chambre, un corps de retenue confiné dans le corps de support et mobile entre une position de libération et une position de retenue, où le corps de retenue est configuré pour être reçu par complémentarité de forme dans le passage dans la partie de liaison de la dent dans le but de coupler la dent pertinente au support de dents dans sa position de retenue,
dans laquelle chaque corps de support comprend une première partie de réception reliée à un premier côté de la chambre et une deuxième partie de réception reliée à un deuxième côté opposé de cette chambre et opposée à la première partie de réception, où, lorsque la dent est insérée avec sa partie de liaison dans cette chambre, la première partie de réception et la deuxième partie de réception sont également alignées avec le passage de cette dent et le corps de retenue s'étend dans la position de retenue à travers le passage et est également reçu par complémentarité de forme dans les première et deuxième parties de réception.

2. Unité de culture du sol selon la revendication 1, dans laquelle chaque corps de retenue a une partie de retenue avec laquelle le corps de retenue est reçu par complémentarité de forme dans la première partie de réception du corps de support et, au moins dans la position de retenue dans la chambre, lorsqu'une dent est présente dans le passage, dans cette dent, où, dans la position de libération, la partie de retenue est reçue dans la première partie de réception et se trouve à l'extérieur de la chambre de sorte qu'une dent puisse être retirée de cette chambre ou insérée dans cette chambre.

3. Unité de culture du sol selon la revendication 2, dans laquelle le corps de retenue est confiné à l'intérieur du corps de support, où le mouvement de la partie de retenue du corps de retenue est limité d'une part par la première partie de réception et, dans la position de retenue, d'autre part par un matériau du corps de support qui forme la paroi de la deuxième partie de réception.

4. Unité de culture du sol selon la revendication 1, 2 ou 3, dans laquelle le support de dents comprend, pour chaque corps de retenue, un élément de ressort qui est configuré pour pousser le corps de retenue sous l'effet de l'action de ressort à sa position de retenue, où le corps de support comprend, pour chaque corps de retenue, une butée qui bloque le mouvement du corps de retenue de la position de libération au-delà de la position de retenue, lequel élément de ressort est de préférence prévu dans la première partie de réception entre une partie de la paroi de la première partie de réception et la partie de retenue du corps de retenue.

5. Unité de culture du sol selon l'une des revendications précédentes, dans laquelle le passage est ouvert par un étranglement sur une extrémité externe libre de la partie de liaison éloignée de la partie de travail.

6. Unité de culture du sol selon la revendication 5, dans laquelle chaque corps de retenue est une broche qui est construite de la partie de retenue et, telle que vue dans la direction longitudinale de la broche, d'une partie rétrécie reliée à celle-ci, laquelle partie rétrécie est telle qu'elle peut passer à travers ledit étranglement dans la partie de liaison de la dent, où, dans la position de retenue du corps de retenue, la partie rétrécie est reçue dans la deuxième partie de réception et dans la position de libération est située dans la chambre.

7. Unité de culture du sol selon l'une des revendications précédentes, dans laquelle chaque corps de retenue peut être actionné à partir du côté externe du support de dents pour son mouvement de la position de retenue à la position de libération.

8. Unité de culture du sol selon les revendications 6 et 7, dans laquelle la deuxième partie de réception est ouverte vers l'extérieur sur son côté éloigné de la chambre de sorte que la partie rétrécie du corps de retenue puisse être actionnée par ce côté externe ouvert de la deuxième partie de réception pour son mouvement de la position de retenue à la position de libération.

9. Unité de culture du sol selon l'une des revendications précédentes, dans laquelle le corps de retenue est un composant en forme de broche solidaire.

10. Unité de culture du sol selon l'une des revendications précédentes, dans laquelle le corps de support comprend une projection faisant saillie dans la chambre, où chacune desdites dents comprend dans sa partie de liaison un évidement, de préférence une rainure, qui est configurée de sorte que, pendant l'insertion de la partie de liaison de la dent dans la chambre, la projection se déplace dans l'évidement, où la projection est de préférence prévue entre la position de la première ou de la deuxième partie de réception associée à cette chambre et l'ouverture de la chambre par laquelle ladite dent peut être insérée avec sa partie de liaison dans cette chambre, où l'évidement est une rainure qui se relie au passage dans la partie de liaison et s'étend dans la direction de la partie de travail.

11. Unité de culture du sol selon la revendication 10, dans laquelle la projection se rétrécit dans la direction de l'ouverture de la chambre par laquelle ladite dent peut être insérée avec sa partie de liaison dans cette chambre, et dans laquelle l'évidement dans la partie de liaison de la dent se rétrécit de préférence dans la direction de la partie de travail de cette dent.

12. Unité de culture du sol selon l'une des revendications précédentes, dans laquelle le corps de support du support de dents est également muni de deux combinaisons d'un élément de positionnement ayant dedans une partie de liaison par vis, telle que de préférence un trou de boulon, où chacune des deux combinaisons comprend des surfaces de butée qui sont configurées pour un couplage rigide à celles-ci dans une orientation prédéterminée d'une dent pour la culture du sol du type liaison par vis de sorte qu'une partie de travail du sol de cette dent s'étende vers le bas, au moins en cours d'utilisation, en vissant la dent sur l'élément de positionnement avec un boulon tout en utilisant le trou de boulon.

13. Dent pour l'application dans une unité de culture du sol selon la revendication 10 ou une revendication qui en dépend, comprenant une partie de liaison et une partie de travail du sol reliée à la partie de liaison et s'étendant essentiellement à angle droit à la partie de liaison, où, dans la partie de liaison, un passage est prévu qui est configuré pour un engagement par complémentarité de forme de la dent dans le but de permettre le couplage de la dent au support de dents, comprenant en outre dans sa partie de liaison, un évidement, de préférence une rainure, qui est configurée de sorte que, pendant l'insertion de la partie de liaison de la dent dans une chambre, la rainure se déplace sur une projection du corps de support du support de dents qui fait saillie dans cette chambre, où l'évidement se relie de préférence au passage dans la partie de liaison et s'étend dans la direction de la partie de travail de cette dent.

14. Support de dents pour une unité de culture du sol selon l'une des revendications 1 à 12 pour une utilisation en combinaison avec deux dents comprenant chacune une partie de liaison et une partie de travail du sol reliée à la partie de liaison et s'étendant essentiellement à angle droit à la partie de liaison, où, dans la partie de liaison, un passage est prévu qui est configuré pour un engagement par complémentarité de forme de la dent dans le but de coupler la dent au support de dents, le support de dents comprenant un corps de support avec deux chambres qui sont adaptées à la partie de liaison des dents et dans chacune desquelles, dans le but de coupler l'une des deux dents au support de dents, la partie de liaison de cette dent peut être insérée,
**caractérisé en ce que** le support de dents comprend en outre, par chambre, un corps de retenue qui est confiné dans le corps de support et qui est mobile entre une position de libération et une position de retenue, où le corps de retenue est configuré pour être reçu par complémentarité de forme dans le passage dans la partie de liaison de l'une des deux dents dans le but de coupler la dent pertinente au support de dents dans sa position de retenue,
dans lequel chaque corps de support comprend une première partie de réception reliée à un premier côté de la chambre et une deuxième partie de réception reliée à un deuxième côté opposé de cette chambre et opposée à la première partie de réception, où, lorsque ladite dent pertinente est insérée avec sa partie de liaison dans cette chambre, la première partie de réception et la deuxième partie de réception sont également alignées avec le passage de cette dent et le corps de retenue s'étend dans la position de retenue à travers le passage et est également reçu par complémentarité de forme dans les première et deuxième parties de réception.

15. Outil de culture du sol, en particulier une herse rotative, comprenant un cadre, une pluralité d'unités de culture du sol selon l'une des revendications 1 à 12 qui sont montées chacune pour tourner autour de leur axe de rotation sur le cadre, et comprenant en outre un mécanisme d'entraînement relié à chacune des unités pour permettre un entraînement combiné de la pluralité d'unités de sorte que chaque unité de celles-ci tourne autour de son axe de rotation.
